# EUROPEAN PATENT APPLICATION

(11) **EP 4 131 005 A1**
(43) Date of publication of application: **08.02.2023**
(21) Application number: 21189560.2
(22) Date of filing: 04.08.2021
(51) Int. Cl.: G06F 9/54, H04L 67/55

(54) **A METHOD TO QUERY MOM OBJECTS USING MQTT OVER WEBSOCKET**

(71) Applicant: Siemens Aktiengesellschaft, 80333 München (DE)
(72) Inventor: TRIFOGLIO, Guiliano, 16153 Genua (IT); MAGAGNINI, Marco, 16137 Genova (IT)
(74) Representative: Siemens Patent Attorneys

(57) **Abstract**

It is the objective of the present invention to define a method that allows to query the MOM domain objects for modifications that needs to be leveraged to a certain UI client requiring this information as relevant for further process control etc.

This objective is achieved according to the present invention by a method for publishing selectively messages to UI clients in a production system that comprises a number of MOM objects and that is controlled by a MOM system, comprising the steps of:
a) predefining a MOM hierarchy thereby grouping the MOM objects into the respective position within the MOM hierarchy;
b) predefining a hierarchy of MQTT topics and topic levels being aligned with said MOM hierarchy;
c) providing a communication system that is enabled to map the messages to the MQTT topics in a dynamic way by extracting relevant data about the MOM hierarchy from the messages and converting the extracted relevant data into the respective MQTT topics and the respective topic levels; and
d) subscribing to MQTT message expressing conditions selectable from the MQTT topics and the topic levels; and
e) receiving the messages matching the subscribed MQTT message expressing conditions at the respective UI client(s) that subscribed accordingly.

Thus, the present invention defines a pattern to map the MOM object model to MQTT topics structure to address the possibility of filtering. The present invention therefore allows to query MOM objects using MQTT design to address filtering on MOM objects update events and to provide active update on UI leveraging by using MQTT over WebSocket.

## Description

The present invention relates to a method for publishing selectively messages to UI clients in a production system.

In the world of process automation and process monitoring standard automation systems for controlling the widest conceivable variety of production resources, machines and plants (MOM objects) are state of the art. Such technology covers in particular a broad range of products which are offered by the Siemens Corp. under its OpCenter^{®} product family with the field of manufacturing operation management (MOM). An extensive line of products for solving the technical tasks in question such as counting, measuring, positioning, motion control, closed-loop control and cam control enhance the performance capabilities of appropriate process controllers. A variety of configurations enable the implementation of flexible machine concepts.

In this context a broad range of IT solutions exist to connect the actual hardware close to the technical and/or logistical process to the application layer of the client driving the installation. Manufacturing execution systems (MES) have therefore been developed to meet all of the requirements of a service-oriented architecture (SOA) to integrate seamlessly into a totally integrated automation (TIA). A plug & play architecture, in which the individual functions can be configured and easily combined with each other thereby forms the basis for this success thereby simplifying the complex structures of controlling a manufacturing plant or the like.

These demands very often require in the backbone rather complicated and sophisticated software solutions which enable the approach of totally integrated automation. In view of this, the software engineers very often use production modeling software to define the plant model and its standard operating procedures and create the respective new software by means of a high-level graphical language which identifies the workflow of activities within the software. Subsequently, this string/term of high-level graphical language is translated into a client based software language executable on the machine language level. This translation requires tremendous efforts in programming and need serious testing to check whether the translated program behaves the same as the original string/term of the high level graphical language.

Within this MES environment a software for a detailed production scheduling (PDS) is provided which concerns the sequencing and the timing of production operations on all manufacturing resources. This software has the aim to create an executable and optimized production schedule that will be executed in production. Before the schedule will be computed, the PDS software needs to be fed with the main input from a plant database such as:
a) the plant logical layout and material flow constraints;
b) the equipment and personnel standard production rates;
c) the availability, the calendar and the status fo the equipment and personnel;
d) knowledge on the way of production (recipes, routings, etc.), process and business constraints;
e) the skills provided by the production resources

Together with this information the PDS software builds its internal model of the plant and of the production process within this plant. Subsequently, by applying the scheduling algorithms to this internal plant model of the plant's resources (MOM objects) and production process, the PDS software computes an executable production schedule which does not violate any physical, logistical and/or business constraints and which optimizes the manufacturing performance.

At this stage, it is not difficult to understand that a number of plant and/or machine operator needs to interact with the manufacturing execution system by means of user interfaces (UI) that are provided on customizable MES screens (UI clients) being displayed on fixed workstations and/or on mobile tablets and the like.

Particularly, in MOM systems modification of the domain objects of a plant or a network of production resources/plants are tracked in the backend and messages notifying these changes are generated. UI clients show to users only a selection of MOM objects and need to be updated once the MOM objects have been subject to relevant changes. Thus, it is necessary to provide both a mechanism to push notification to the UI and to guarantee adequate filtering capabilities based on identification of the MOM objects.

The UI clients can be realized with different technologies and network band width needs to be taken into consideration. For these reasons MQTT over Websocket is an adequate technology being based on a standard which supports many different technologies and is highly optimized for low-bandwidth connection.

In this environment, MQTT, the"Message Queuing Telemetry Transport", is a lightweight, publish-subscribe network protocol that transports messages between the MOM objects and the data backend. The protocol usually runs over TCP/IP; however, any network protocol that provides ordered, lossless, bi-directional connections can support MQTT. MQTT is designed for connections with remote locations where a "small code footprint" is required or the network bandwidth is limited. The protocol is an open OASIS standard and an ISO recommendation (ISO/IEC 20922) .

For application with MOM environments, the MQTT protocol defines two types of network entities: a message broker and a number of clients In this context the clients are all kind of MOM data consumers, like PDS, shopfloor, or MOM application in general. MOM Objects are usually MOM entities, like "Equipment, Materials, etc.". An MQTT broker is a server that receives all messages from the clients and then routes the messages to the appropriate destination clients. An MQTT client is any device (from a micro controller up to a fully-fledged server) that runs an MQTT library and connects to an MQTT broker over a network. Information is organized in a hierarchy of topics. When a publisher has a change of a MOM object to be distributed, the controller of the MOM object sends a control message with the relevant data representing this change to the connected broker. The broker then distributes the information to any clients that have subscribed to that topic. The publisher does not need to have any data on the number or locations of subscribers, and subscribers, in turn, do not have to be configured with any data about the publishers.

If a broker receives a message on a topic for which there are no current subscribers, the broker discards the message unless the publisher of the message designated the message as a retained message. A retained message is a normal MQTT message with the retained flag set to true. The broker stores the last retained message and the corresponding QoS for the selected topic. Each client that subscribes to a topic pattern that matches the topic of the retained message receives the retained message immediately after they subscribe. The broker stores only one retained message per topic. This allows new subscribers to a topic to receive the most current value rather than waiting for the next update from a publisher.

When a publishing client first connects to the broker, it can set up a default message to be sent to subscribers if the broker detects that the publishing client has unexpectedly disconnected from the broker. The clients only interact with the broker, but a system may contain several broker servers that exchange data based on their current subscribers' topics.

A minimal MQTT control message can be as little as two bytes of data. A control message can carry nearly 256 megabytes of data if needed. There are fourteen defined message types used to connect and disconnect a client from a broker, to publish data, to acknowledge receipt of data, and to supervise the connection between client and server.
MQTT relies on the TCP protocol for data transmission. A variant, MQTT-SN, is used over other transports such as UDP or Bluetooth. MQTT sends connection credentials in plain text format and does not include any measures for security or authentication. This can be provided by using TLS to encrypt and protect the transferred information against interception, modification or forgery. The default unencrypted MQTT port is 1883. The encrypted port is 8883.

As an example for a protocol to be used in the MQTT environment, WebSocket is a computer communications protocol, providing full-duplex communication channels over a single TCP connection. The WebSocket protocol was standardized by the IETF as RFC 6455in 2011, and the WebSocket API in Web IDL is being standardized by the W3C.

WebSocket is distinct from HTTP. Both protocols are located at layer 7 in the OSI model and depend on TCP at layer 4. Although they are different, RFC 6455 states that WebSocket "is designed to work over HTTP ports 443 and 80 as well as to support HTTP proxies and intermediaries," thus making it compatible with HTTP. To achieve compatibility, the WebSocket handshake uses the HTTP Upgrade header to change from the HTTP protocol to the WebSocket protocol.

The WebSocket protocol enables interaction between a web browser (or other client application, such as the UI client and/or the MOM objects) and a web server (broker) with lower overhead than half-duplex alternatives such as HTTP polling, facilitating real-time data transfer from and to the server. This is made possible by providing a standardized way for the server to send content to the client without being first requested by the client, and allowing messages to be passed back and forth while keeping the connection open. In this way, a two-way ongoing conversation can take place between the client and the server. The communications are usually done over TCP port number 443 (or 80 in the case of unsecured connections), which is beneficial for environments that block non-web Internet connections using a firewall. Similar two-way browser-server communications have been achieved in non-standardized ways using stopgap technologies such as Comet.

In MQTT messages are bound to topics. The topics are structured in hierarchic levels and clients can subscribe to receive messages from a topic leveraging some filtering capabilities of topic levels. Topic does not need to be predefined. Unfortunately, MQTT does not provide a capability to express filtering condition on the subscription to the MOM objects.

Thus, it is the objective of the present invention to define a method that allows to query the MOM domain objects for modifications that needs to be leveraged to a certain UI client requiring this information as relevant for further process control etc.

This objective is achieved according to the present invention by a method for publishing selectively messages to UI clients in a production system that comprises a number of MOM objects and that is controlled by a MOM system, comprising the steps of:
a) predefining a MOM hierarchy thereby grouping the MOM objects into the respective position within the MOM hierarchy;
b) predefining a hierarchy of MQTT topics and topic levels being aligned with said MOM hierarchy;
c) providing a communication system that is enabled to map the messages to the MQTT topics in a dynamic way by extracting relevant data about the MOM hierarchy from the messages and converting the extracted relevant data into the respective MQTT topics and the respective topic levels; and
d) subscribing to MQTT message expressing conditions selectable from the MQTT topics and the topic levels; and
e) receiving the messages matching the subscribed MQTT message expressing conditions at the respective UI client(s) that subscribed accordingly.

Thus, the present invention defines a pattern to map the MOM object model to MQTT topics structure to address the possibility of filtering. The present invention therefore allows to query MOM objects using MQTT design to address filtering on MOM objects update events and to provide active update on UI leveraging by using MQTT over WebSocket. Therefore, the present invention enables the MOM operator to cope with a brought variety of different types of messages in the MOM system. Each of them carries information about a modification of some MOM objects. As an example, not an exhaustive list, the following messages can be considered:
- Notification about a state change of a production operation. This includes start of manufacturing operation, completion, assignment to operator or workplace, etc.
- Notification about materials, including material consumption, assembly, transformation, production, movement
- Notification about quality, including defects, scrap, rework, deviations, etc.
Each of such messages can be mapped by the MOM system to one or more classifications defined as hierarchy. Some examples include:
- Manufacturing operations: every production operation is always decomposable starting from a manufacturing order divided in production operations. Each operation can be further divided in steps. At operation and steps level also the relevant material are indicated.
- Manufacturing facilities: the production operations are bound to the physical location where the production takes places. This can be modelled with a hierarchical structure starting from the site up to the final workplace or device.

In order to optimally benefit from the existing communication and network protocols today available, the present invention preferably enables the communication system to use MQTT over WebSocket for the publishing of the messages according to the chosen subscription and the predefined MQTT topics and topic levels.

A further preferred embodiment of the present invention can be achieved when the MOM objects are production resources, such as machines, material, personnel, and production operations, such as production steps, material consumption, machines set-up and/or maintenance and the like. These MOM objects usually suffice to operates the required production activities in a brought range of industries.

Suitable ways for the predefinition of MOM hierarchy can be achieved when the MOM hierarchy and its hierarchy type and hierarchy details can be defined by the hierarchy of the production system being either based on common generic structures, such as defined by manufacturing international standards, such as ISO S-95, or state-of-the art and de-facto standards, or by specialization for a particular type of production process or specific to a customer and/or a distinct production facility.

A further preferred embodiment of the present invention can be achieved when the communication system owns all the information and knowledge to map raw messages to the correct position in the predefined MOM hierarchy, optionally adding data not available in the raw message by retrieving this data from data specifically made available in the MOM system. This additional data can be made available for example in centrally available contextualization data.

In order to render the data and possible messages required by a specific UI client more precisely, the UI clients in the MOM system can be configured to work on a specific subset of MOM data only. Specifically, a UI client can be linked to specific MOM object, such as a specific workplace and/or to a specific production step and/or to a specific product. Thus, this link identifies via the specific MOM objects their respective MOM hierarchy and the specific position inside the MOM hierarchy thereby enabling to leverage on the so composed MQTT topics the possibility of punctual subscriptions for this specific UI client.

Preferred embodiments are hereinafter described in more detail with reference to the attached drawings which depict in:
- Figure 1: schematically a set-up for message mapping in a MOM system; and
- Figure 2: schematically the mapping of a message in the MOM system for its delivery to a UI client.

The present invention provides a mechanism to map MOM messages in an a MOM system to MQTT topics in a dynamic way. The mapping is realized by extracting from the messages that are released by the MOM objects the relevant information about the MOM hierarchy and converting this information as MQTT topics and topic levels. This allows an UI client in the MOM system to subscribe to MQTT expressing conditions. Thus, the UI client only receives the messages relevant for this specifically subscribing UI client.

IN the production environment of a production facility, typically the MOM objects are production resources, such as machines, material, personnel, and production operations, such as production steps, material consumption, machines set-up and/or maintenance and the like. These MOM objects usually suffice to operates the required production activities in a brought range of industries. Each message from a MOM object which needs to be published for the UI clients must be mapped on a predefined MOM hierarchy. The hierarchy type and the details are defined by the nature of the MOM system and can be based on common generic structures, such as the one defined by manufacturing international standards, such as ISO S-95, or state-of-the art and de-facto standards, or by the specialization for a particular type of production process or due to a specific set-up at a specific customer/facility.

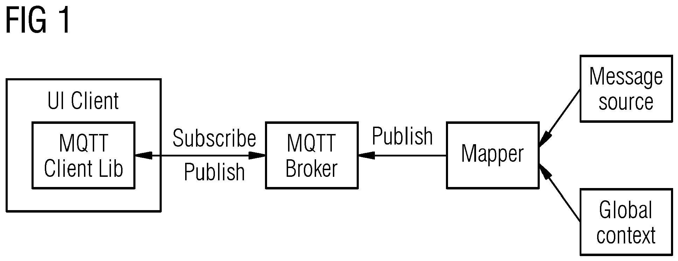

The MOM system which is the operational software and all the MOM objects in a specific manufacturing environment owns all the information and knowledge to map the raw messages coming from the MOM objects to the correct position in the identified hierarchy, eventually adding information not available in the raw message by retrieving this information from the data available in the MOM system identified for example in the document "Global context" as shown in Figure 1. The result of the activity of a mapper as shown in Figure 1 is the generation of a structured message, for example, as following:

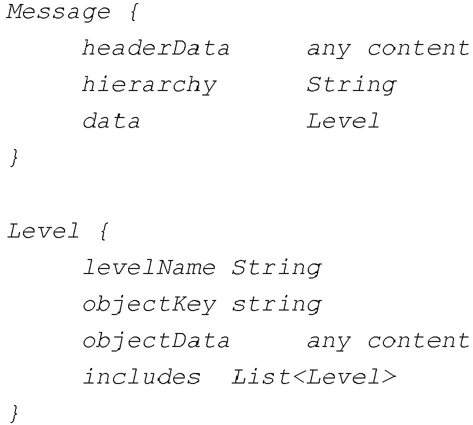

The *levelName* indication present in each item is congruent with the *hierarchy* mentioned in the message header. A raw message can be mapped to more than one structured message if multiple hierarchies are compatible for the raw message.

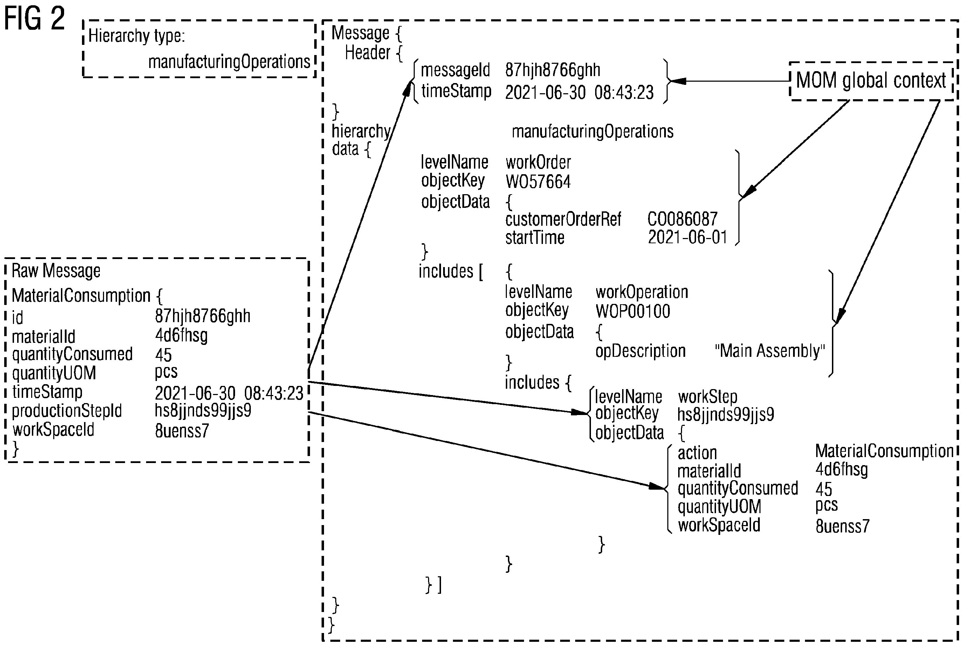

Figure 2 shows a detailed example of the activity of the mapping. The Mapper that is aware of the chosen MOM hierarchy, thus being enabled to extract the relevant information to "sort" the raw message into the applied MOM hierarchy in order to structure the more enriched mapped message to be "readable" by the MQTT broker. This more enriched meassage is then forwarded/published by the mapper to the MQTT broker which is composing the MQTT topics on which the message will be published by extracting this enriched and MOM hierarchy conform information from the message itself. The MQTT topics will be composed as following:

```
 «Hierarchy»/«HierarchyLevel»/«ObjectKey»[/«HierarchyLevel»/«ObjectKey
 »]*
```

In the example of Figure 2, the computed topic will be: manufacturingOperations/workOrder/WO57664/workOperation/WOP00100/work Step/hs8jjnds99jjs9

Having the messages published on the MQTT broker as previously explained, the UI clients are then enabled to perform subscriptions to receive only those messages containing data they are interested in. For example, a specific UI client at a specific workstation on which the work order "WO57664" will be executed or is currently executed will receive all relevant messages related to this work order from the MOM objects within the manufacturing environment that is organized according to the predefined MOM hierarchy.

Typically, the UI client in the MOM system is configured to work on a specific subset of MOM data. There exists UI client bound to a specific workplace and/or to a specific production step and/or to a specific product etc. Such configuration binds and identifies the respective MOM hierarchy and a specific position inside the MOM hierarchy; thus, it is possible to leverage on the composed topic to perform punctual subscriptions for each individual UI client.

For example, considering the manufacturingOperation hierarchy of the sample according to Figure 2, which is composed as follows:

```
 {manufacturingOperation/workOrder/workOrderKey/workOperation/workOper
 ationKey/workStep/workStepKey}
```

An UI client will be able to perform different type of subscriptions, an example for this mechanism for subscription is given in the table below:

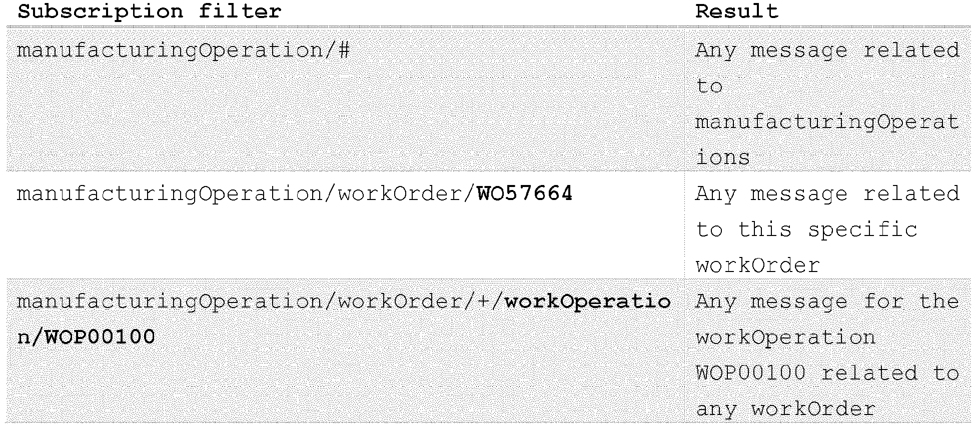

The component that realizes the above-mentioned mapping and publishing is the Mapper of Figure 1. This mapper receives the raw messages from a Message Source (this message source is typically a MOM object in the MOM system) and is optionally capable to extract further information from the MOM Global context as shown in Figure 1. With these data items and the knowledge about the predefined MOM hierarchy, the mapping is generated for every raw message. For each raw message from a message source (here: the MOM objects) a more structured (enriched) message is generated as this is shown for the conversion of the raw message (left box in Figure 2) into the more structured message (right box in Figure 2). This more structured message is then published to the MQTT broker with the correct MOM topic mapping thereby reflecting the predefined MOM hierarchy and the MQTT topics and topic levels deducted thereof. The UI client is enabled to use any generic MQTT client library to subscribe to the MQTT broker under the specification of a correct topic filter. Thus, the UI client will receive only those messages it has subscribed for.

## Claims

1. A method for publishing selectively messages to UI clients in a production system that comprises a number of MOM objects and that is controlled by a MOM system, comprising the steps of:
a) predefining a MOM hierarchy thereby grouping the MOM objects into the respective position within the MOM hierarchy;
b) predefining a hierarchy of MQTT topics and topic levels being aligned with said MOM hierarchy;
c) providing a communication system that is enabled to map the messages to the MQTT topics in a dynamic way by extracting relevant data about the MOM hierarchy from the messages and converting the extracted relevant data into the respective MQTT topics and the respective topic levels; and
d) subscribing to MQTT message expressing conditions selectable from the MQTT topics and the topic levels; and
e) receiving the messages matching the subscribed MQTT message expressing conditions at the respective UI client(s) that subscribed accordingly.

2. The method according to claim 1, wherein the communication system uses MQTT over WebSocket for the publishing of the messages according to the chosen subscription and the predefined MQTT topics and topic levels.

3. The method according to claim 1 or 2, wherein the MOM objects are production resources, such as machines, material, personnel, and production operations, such as production steps, material consumption, machines set-up and/or maintenance and the like.

4. The method according to any of the preceding claims wherein the MOM hierarchy and its hierarchy type and hierarchy details are defined by the hierarchy of the production system being either based on common generic structures, such as defined by manufacturing international standards or state-of-the art and de-facto standards, or by specialization for a particular type of production process or specific to a customer and/or a distinct production facility.

5. The method according to any of the preceding claims wherein the communication system owns all the information and knowledge to map raw messages to the correct position in the predefined MOM hierarchy, optionally adding data not available in the raw message by retrieving this data from data specifically made available in the MOM system.

6. The method according to any of the preceding claims wherein the communication system works according to the protocol of MQTT over WebSocket.

7. The method according to any of the preceding claims wherein the UI clients in the MOM system are configured to work on a specific subset of MOM data.

8. The method according to claim 7 wherein a UI client is linked to specific MOM object, such as a specific workplace and/or to a specific production step and/or to a specific product, wherein this link identifies via the specific MOM objects their respective MOM hierarchy and the specific position inside the MOM hierarchy thereby enabling to leverage on the so composed MQTT topics the possibility of punctual subscriptions for this specific UI client.
